# EUROPEAN PATENT SPECIFICATION

(11) **EP 1 424 847 B1**
(45) Date of publication and mention of the grant of the patent: **21.05.2008**
(21) Application number: 02079959.9
(22) Date of filing: 27.11.2002
(51) Int. Cl.: H04M 19/04, G08B 6/00

(54) **Vibrator for portable communication device**
Rütteleinrichtung für einen mobilen Kommunikationsapparat
Vibreur pour appareil de communication portable

(43) Date of publication of application: 02.06.2004
(73) Proprietor: Sony Ericsson Mobile Communications AB, 221 88 Lund (SE)
(72) Inventor: Ormin, Mats, 21232 Malmö (SE)
(74) Representative: Dahnér, Christer

(56) References cited:
- EP-A- 0 688 125
- WO-A-00/55959
- US-A- 5 835 006
- PATENT ABSTRACTS OF JAPAN vol. 2000, no. 05, 14 September 2000 (2000-09-14) & JP 2000 049915 A (TOSHIBA CORP), 18 February 2000 (2000-02-18)

## Description

### TECHNICAL FIELD OF THE INVENTION

The present Invention relates to the field of portable communication devices, which are provided with a rotational vibrator as well as to such a rotational vibrator.

### DESCRIPTION OF RELATED ART

It is known within the field of portable communication devices to provide these with rotational vibrators, which can alert a user of the device that a telephone call is being received without having to use a ring signal. This is of interest when the user does not want his environment to hear the ring signal, which might be because he might disturb an important meeting. It is also good to have in case the device is placed such that the ring signal is not heard although the user wants to be able to answer calls. Such instances can be if the device is for instance placed in the pocket of a user. Another situation when a vibrator might be used is when playing games or music.

WO 00/55959 describes a vibrator that is placed in a compartment of a shell of a mobile telephone. A negative contact element of the vibrator is connected to a portion of this shell in order to provide protection from electromagnetic Interference.

From a performance point of view it is often best to provide the vibrator close to an end of the device for getting better vibrations. The best end is then at an end that is furthest away from the centre of mass of the device, which end is in many cases the top end of the device. There is however a problem in that often the antenna of the portable communication device is provided at the same end, and the known vibrators have proven to influence the antenna in a bad way.

It is furthermore often not too good to place the vibrator at the bottom end of the device, since then it is closer to the centre of mass of the device and this space is often also occupied by other components such as a system connector and a microphone.

There is thus a need for a solution that enables the rotational vibrator to be provided in the same and as an antenna for better performance of the vibrator, but without subjecting the antenna to an influence from fluctuating reflections caused by the vibrator rotor.

### SUMMARY OF THE INVENTION

The present invention is thus directed towards the problem of providing a rotational vibrator that can be placed In the same end as an antenna for better performance of the vibrator but without subjecting the antenna to an influence from fluctuating reflections caused by the vibrator rotor.

One object of the present invention is thus to provide a rotational vibrator, which can be provided in the same end as an antenna for better performance of the vibrator but without subjecting the antenna to an influence from fluctuating reflections caused by the vibrator rotor.

According to a first aspect of the invention this object is achieved by a rotational vibrator for use in a portable communication device as set out in claim 1.

Further aspects of the invention are as set out in the dependent claims.

The invention has the following advantages. The rotational vibrator can be placed in the same end as the antenna without subjecting the antenna to an influence from fluctuating reflections caused by the vibrator rotor. Because of this the vibrator can be placed at an end of the device where it has its best performance. This makes it possible to keep the portable communication device smaller in size. This does furthermore save energy when driving the vibrator. Because of this the portable communication device can be driven longer without having to be recharged. The weight of the concentric rotational device can also be reduced compared to what is otherwise needed, which thus allows the total weight of the portable communication device to be kept low.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a portable communication device in the form of a cellular phone,
fig. 2 shows a schematical top view of the interior of the portable communication device, where the vibrator is provided close to the antenna of the phone in fig. 1,
fig. 3 shows a perspective view of the rotational vibrator according to the invention where a screening metal case covering and end portion of the vibrator is indicated with dashed lines,
fig. 4 shows a sectional view of the vibrator with the screening metal case in fig. 3, where the section has been taken along a line A-A in fig. 3, and
fig. 5 shows a perspective view of the screening metal case in the vibrator according to the invention.

### DETAILED DESCRIPTION OF EMBODIMENTS

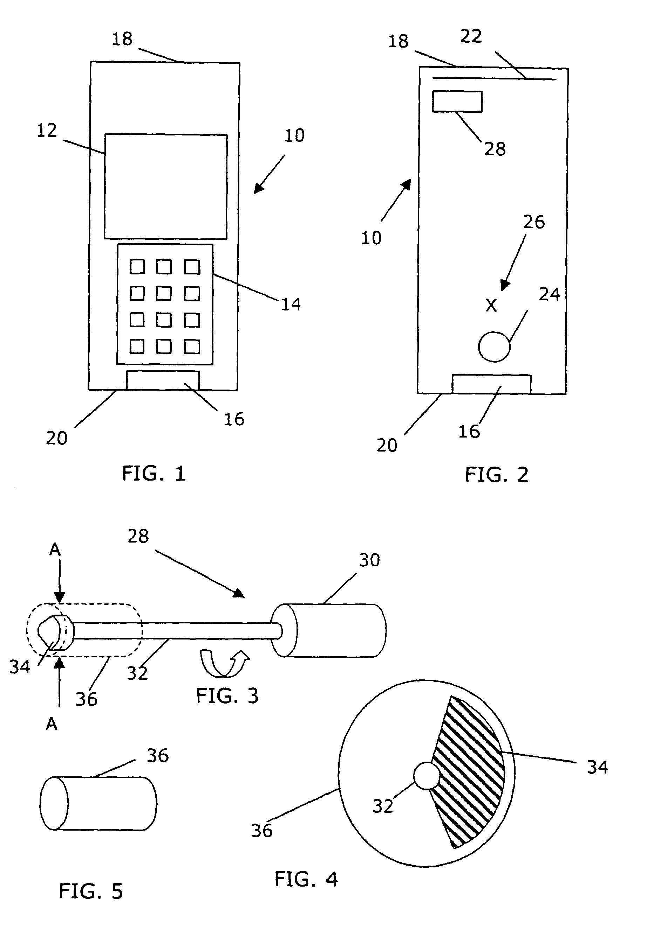

A portable communication device 10 according to the invention is shown in fig. 1. In the preferred embodiment the device is a cellular device 10 having a display 12, a keypad 14 and a system connector 16. The phone also has an antenna, but it is in-built in the phone. It should be realised that the portable communication device need not be a phone, but can be any other type of portable communication device, like a PDA (personal digital assistant), a palm top computer or a smartphone. As can be seen in the figure the phone 10 is provided with a body having two long sides and a top 18 and a bottom end 20, where the system connector 16 is provided at the bottom end 20 of the phone.

Fig. 2 shows a schematical top view of the interior of the phone 10 according to the invention. For better understanding of the invention only elements having a bearing on the invention are shown. As in fig. 1 fig. 2 shows a system connector 16 at the bottom end 20 of the phone. Just above the system connector a microphone 24 is provided. At the other end of the phone, the top end 18, an antenna 22 is provided. This antenna 22 is an in-built antenna provided in the form of a metallic strip stretching along the length of the top end 18. Just below this antenna 22 a rotational vibrator 28 according to the invention is provided. The vibrator is placed such that a rotor shaft (not shown) of the vibrator is parallel with the metallic strip. The centre of mass 26 of the phone is also shown with an X. The centre of mass is located at a point approximately halfway between the two long sides of the phone and closer to the bottom end than the top end, which is common for most phones.

In order to provide the best possible vibrational performance it is often best to place the vibrator at a corner of the phone at either the top or the bottom end. The bottom end is often not possible to use because the system connector 16 and the microphone 24 are provided in that area. There is just not enough space. It is also often good to provide the vibrator as far as possible from the centre of mass of the phone in order to get the best vibrational performance. Therefore the best position of the vibrator 28 is at a corner defined by a long side and the top end from a vibrational point of view. As can be seen from fig. 2, the antenna 22 is stretching from one of these corners to the next corner. From a spatial point of view, the antenna is no problem, since it occupies little space. Thus the vibrator can easily be fit in that region of the phone. There is one problem though, and that is that when the vibrator is rotated, elements thereof will cause an influence on the antenna performance. Parts of the rotating elements of the vibrator will provide reflections that disturb the antenna. Because of this the vibrator is placed far from the antenna in known phones, although this is not efficient from a vibrational point of view. However, the present invention does allow the vibrator to be placed close to the antenna without influencing the antenna efficiency. How this is achieved will be described shortly.

Fig. 3 shows the rotational vibrator 24 according to the invention. The vibrator 28 includes an electrical motor 30 of which the rotor is provided with a shaft 32 defining an axis of rotation. The rotation when in use is indicated with an arrow round the shaft 32. The shaft 32 has an end at which an eccentric rotational body in the form of a flywheel 34 is provided. The flywheel 34 is formed as a circle sector covering between 90 and 180 degrees of an angle of a circle round the axis or between 150 and 180 degrees and preferably 165 degrees. The weight of the eccentric rotational body 38 is high compared to the weight of the rotor shaft 32, which enables a good vibrational performance. Angle and weight are dimensioned for best performance. When being operated the motor 30 makes the shaft 28 rotate around the axis. Thereby the flywheel is made to rotate in the direction indicated by the arrow in the figure. The flywheel then has an eccentric rotation round said axis, which eccentric rotation is the cause for the reflections disturbing the antenna. Round the eccentric rotational body 34 a screening metal case 36 is covering the shaft end with the eccentric rotational body. The screening metal case has a shape that is symmetrical round the axis of rotation defined by the shaft and is preferably in the form of a cylinder having one open end facing the motor and another closed end provided at the end of the shaft 32 with the eccentric rotational body 38. In the figure the screening metal case 36 is shown with dashed lines in order to show the underlying parts of the vibrator. Fig. 4 shows a sectional view of the rotational parts of the vibrator furthest from the end motor together with the metal screening case 36, where the section has been taken along a line A - A in fig. 3. As can be seen the flywheel 34 is fitted within the cylinder. Fig. 5 shows a perspective view of the shielding metal case 36. The shielding metal case is thin and does thus not weigh much. The shielding metal case is floating in an electrical sense, i.e. not connected to any electrical potential. This is most simple done by fitting the case in the body of the phone, which is plastic. As an alternative the shielding metal case can be grounded or connected to another electrical potential than the antenna. Because of the shielding metal case, the antenna is not influenced by the rotation of the flywheel, which it would otherwise be. This leads to it being possible to place at a corner close to the top end of the phone without influencing the antenna.

The present invention has several advantages. The rotational vibrator is placed at a location in the phone where the best vibrations are achieved. This therefore leads to the vibrator also being less energy consuming than known vibrators providing the same vibrational effect and placed somewhere else in the phone. The weight of the flywheel can also be kept low, which reduces the weight of the device. The total size of the device is also be kept low because the vibrator can be placed close to the antenna.

The invention can also be varied in many ways. The screening metal case can be provided in different lengths ranging from only covering the flywheel up to covering the whole shaft up to the motor, it is however preferred to keep it as small as possible in order to reduce the influence on the antenna as much as possible. The size of the shaft can also be varied. An alternative embodiment of the phone has a fairly long shaft, where the motor is provided at a long distance form the corner where the flywheel is provided. The flywheel does not have to be provided as a sector of a circle, but it is sufficient that it is eccentric. The vibrator can as an alternative be placed such that the shaft is perpendicular to the antenna along the top end. Other directions in relation to the antenna element are of course also possible. The vibrator is thus in this case provided along one long side of the phone. It is also possible to have more than one antenna element in the phone, where each might be provided for a different frequency band. The antenna element does not have to be formed as a strip but can have another structure like a meandering structure. An antenna element does furthermore not have to be provided along the entire top end of the phone. It is of course also possible to place the vibrator in any part of the phone, i.e. it is not limited to be placed in a top end corner. However, if it is placed elsewhere the vibrator might not provide the best vibrational performance.

## Claims

1. Rotational vibrator (28) for use in a portable communication device (10) comprising:
a motor (30) including a rotor having a shaft (32) with an end provided will
an eccentric rotational body (34),
**characterised by**
a screening metal case (36) provided at least round the eccentric rotational body, such that an influence from fluctuating reflections caused by the vibrator rotor on an antenna (22) in the portable communication device is diminished.

2. Rotational vibrator (28) according to claim 1, wherein the screening metal case (36) has symmetrical shape round a rotational axis defined by the rotor shaft (32).

3. Rotational vibrator (28) according to claim 2, wherein the screening metal case (36) has a cylindrical shape.

4. Rotational vibrator (28) according to any previous claim, wherein the screening metal case covers the whole of the rotor axis outside the motor.

5. Rotational vibrator (28) according to any previous claim, wherein the eccentric rotational body (36) is provided in the form of a flywheel at the end of the rotor shaft covering between ninety and one hundred and eighty degrees of a circle round the shaft (32).

6. Rotational vibrator (28) according to any previous claim, wherein the screening metal case (36) is only provided round rotational parts of the vibrator.

7. Portable communication device (10) comprising a body having a first (18) and second (20) end, an antenna (22) provided in the body, and a rotational vibrator (28) according to claim 1.

8. Portable communication device (10) according to claim 7, wherein the antenna (22) is provided close to the first end (18) of the body.

9. Portable communication device (10) according to claim 8, wherein at least the screening metal case (36) and the eccentric rotational body (34) of the rotational vibrator (28) are also provided close to the first end (18) of tha body.

10. Portable communication device (10) according to claim 9, wherein the centre of mass (26) of the portable communication device is provided closer to the second end (20) of the body than the first end (18) of the body.

11. Portable communication device (10) according to any of claims 7 - 10, wherein the device is a cellular phone.

## Patentansprüche

1. Rotierender Vibrator (28) zur Verwendung in einem tragbaren Kommunikationsgerät (10), aufweisend:
einen Motor (30) einschließlich eines Rotors mit einem Schaft (32), an
dessen einem Ende ein exzentrisches Rotationselement angeordnet ist.
**dadurch gekennzeichnet, dass**
ein metallisches Abschirmgehäuse (36), welches zumindest um das exzentrische Rotationselement so angeordnet ist, dass ein Einfluss fluktuierender vom Vibratorrotor ausgehender Reflexionen auf eine Antenne (22) im tragbaren Kommunikationsgerät vermindert wird.

2. Rotierender Vibrator (28) nach Anspruch 1, wobei das metallische Abschirmgehäuse (36) eine symmetrische Form um eine durch den Rotorschaft (32) definierte Rotationsachse aufweist.

3. Rotierender Vibrator (28) nach Anspruch 2, wobei das metallische Abschirmgehäuse (36) eine zylindrische Form aufweist.

4. Rotierender Vibrator (28) nach einem der vorstehenden Ansprüche, wobei das metallische Abschirmgehäuse den gesamten außerhalb des Motors liegenden Teil der Rotorachse abdeckt.

5. Rotierender Vibrator (28) nach einem der vorstehenden Ansprüche, wobei das exzentrische Rotationselement (36) in Form eines Schwungrads am Ende des Rotorschafts angeordnet ist und zwischen 90° und 180° eines Kreises um den Schaft (32) abdeckt.

6. Rotierender Vibrator (28) nach einem der vorstehenden Ansprüche, wobei das metallische Abschirmgehäuse (36) nur um die rotierenden Teile des Vibrators angeordnet ist.

7. Tragbares Kommunikationsgerät (10), welches einen Körper mit einem ersten (18) und einem zweiten (20) Ende, eine im Körper angeordnete Antenne (22) und einen rotierenden Vibrator (28) nach Anspruch 1 aufweist.

8. Tragbares Kommunikationsgerät (10) nach Anspruch 7, wobei die Antenne (22) nahe dem ersten (18) Ende des Körpers angebracht ist.

9. Tragbares Kommunikationsgenät (10) nach Anspruch 8, wobei zumindest das metallische Abschirmgehäuse (36) und das exzentrische Rotationselement (34) des rotierenden Vibrators (28) ebenfalls nahe dem ersten (18) Ende des Körpers angebracht sind.

10. Tragbares Kommunikationsgerät (10) nach Anspruch 9, wobei der Schwerpunkt (26) des tragbaren Kommunikationsgeräts näher am zweiten (20) als am ersten (18) Ende des Körpers angeordnet ist.

11. Tragbares Kommunikationsgerät (10) nach einem der Ansprüche 7 bis 10, wobei das Gerät ein Mobiltelefon ist.

## Revendications

1. Vibreur rotatif (28) destiné à être utilisé dans un dispositif de communication portable (10), comprenant :
un moteur (30) comprenant un rotor avec un arbre (32) dont une extrémité est dotée d'un corps rotatif excentrique (34),
**caractérisé par**
un carter métallique de blindage (36) placé au moins autour du corps rotatif excentrique afin de diminuer une influence exercée par les réflexions variées du rotor du vibreur sur une antenne (22) du dispositif de communication portable.

2. Vibreur rotatif (28) selon la revendication 1, dans lequel le carter métallique de blindage (36) a une forme symétrique autour d'un axe de rotation défini par l'arbre (32) du rotor.

3. Vibreur rotatif (28) selon la revendication 2, dans lequel le carter métallique de blindage (36) a une forme cylindrique.

4. Vibreur rotatif (28) selon l'une quelconque des revendications précédentes, dans lequel le carter métallique de blindage recouvre la totalité de l'axe du rotor en dehors du moteur.

5. Vibreur rotatif (28) selon l'une quelconque des revendications précédentes, dans lequel le corps rotatif excentrique (36) est fourni sous la forme d'un volant à l'extrémité de l'arbre du rotor couvrant entre quatre-vingt-dix et cent quatre-vingt degrés d'un cercle autour de l'arbre (32) .

6. Vibreur rotatif (28) selon l'une quelconque des revendications précédentes, dans lequel le carter métallique de blindage (36) est seulement fourni autour de pièces en rotation du vibreur.

7. Dispositif de communication portable (10) comprenant un corps ayant une première (18) et une seconde (20) extrémité, une antenne (22) implantée dans le corps et un vibreur rotatif (28) selon la revendication 1.

8. Dispositif de communication portable (10) selon la revendication 7, dans lequel l'antenne (22) est implantée près de la première extrémité (18) du corps.

9. Dispositif de communication portable (10) selon la revendication 8, dans lequel au moins le carter métallique de blindage (36) et le corps rotatif excentrique (34) du vibreur rotatif (28) sont également implantés près de la première extrémité (18) du corps.

10. Dispositif de communication portable (10) selon la revendication 9, dans lequel le centre de gravité (26) du dispositif de communication portable est situé plus près de la second extrémité (20) du corps que de la première extrémité (18) du corps.

11. Dispositif de communication portable (10) selon l'une quelconque des revendications 7 à 10, dans lequel le dispositif est un téléphone cellulaire.
